(19) Europäisches Patentamt
European Patent Office
Office européen des brevets

(11) EP 0 967 534 B1

(12) EUROPEAN PATENT SPECIFICATION

(45) Date of publication and mention of the grant of the patent: **07.01.2004 Bulletin 2004/02**

(51) Int Cl.[7]: **G05B 13/02**, F02D 41/14

(21) Application number: **99109952.4**

(22) Date of filing: **20.05.1999**

(54) **Online learning method**

Online Lernverfahren

Procédé d'apprentissage en ligne

(84) Designated Contracting States:
**DE FR GB IT**

(30) Priority: **04.06.1998 JP 15567498**
**20.05.1998 JP 13854598**

(43) Date of publication of application:
**29.12.1999 Bulletin 1999/52**

(73) Proprietor: **YAMAHA HATSUDOKI KABUSHIKI KAISHA**
**Iwata-shi Shizuoka-ken (JP)**

(72) Inventor: **Fujime, Yoko**
**Iwata-shi, Shizuoka-ken (JP)**

(74) Representative: **Grünecker, Kinkeldey, Stockmair & Schwanhäusser Anwaltssozietät**
**Maximilianstrasse 58**
**80538 München (DE)**

(56) References cited:
**US-A- 5 483 945** **US-A- 5 743 244**

- **PATENT ABSTRACTS OF JAPAN vol. 015, no. 089 (M-1088), 4 March 1991 (1991-03-04) & JP 02 305372 A (FUJI HEAVY IND LTD), 18 December 1990 (1990-12-18) & US 5 035 219 A (OHKUMO ET AL) 30 July 1991 (1991-07-30)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 967 534 B1

## Description

The present invention relates to an online learning method according to the preamble portion of claim 1.

A control method for fuel supply to internal combustion engines applying a learning algorithm coupled with a parameter adaptation algorithm is known from US 5,743,244, wherein an open-loop fuel parameter map or schedule is modified (updated) based on a determination of fuel puddle dynamics by estimating parameters of a wall-wetting dynamic model during closed-loop operation of the engine. The modified (updated) open-loop fuel parameter map is used during open-loop operation, e.g. during crank and cold starts.

Additionally, a learning control system for controlling an air/fuel ratio in engines employing first and second learning control variables with different updating rates, wherein the learning rate of said second learning control variable is set lower than the learning rate of said first learning control variable, is known from US 5,483,945. The values of the first and second learning control variables are obtained by comparing a sensed engine operating condition with a predefined array of engine operating areas. Said values are stored in separate memory means. A combined signal of said variables, that is a summation thereof, generated by a separate calculating means is used to determine a fuel supply quantity.

A method and a system for controlling ignition timing of internal combustion engines, wherein a calculation of an ignition timing is based on a basic ignition timing and a learning correction quantity including large and small correcting quantities is known from JP-A-02305372 and US 5,035,219, wherein said quantities are stored in a back-up memory. It is disclosed that at starting of the engine a temporary correcting quantity having a small value is used for calculating the ignition timing. Said temporary correcting quantity is subsequently increased until knocking of the engine occurs. Said temporary correction quantity is, then, compared with the large correction quantity and an ignition timing is calculated based on a difference between large and temporary correcting quantities.

With regard to engines of the prior art which inject fuel into their air intake passages, fuel injection systems have employed air/fuel ratio sensors that detect the air/fuel ratio (A/F) in the exhaust gases following combustion, and then this feedback was used to control the amount of fuel that is injected, thereby allowing improvements in such areas as engine performance and gas economy. Using this method, it is possible to compute corrections for the amount of air intake, but if it were possible to correct for the actual amount of air intake and to control the amount of fuel injection based on that amount of air intake, then it would be possible to adjust the current air/fuel ratio to the target air/fuel ratio. However, in actual applications, the amount of fuel injection and the amount of air intake vary due to a number of factors which result in a gap between the current air/fuel ratio and the target air/fuel ratio. The reasons are: first, not all of the fuel which is injected into the air intake tube reaches the combustion chamber, a part of the fuel adheres to the air intake tube walls, and the amount of fuel that so adheres varies according to such factors as the engine operating state and the temperature of the air intake tube walls, and these factors change the amount of fuel that adheres according to an evaporation time constant. The operating state of the engine also causes variation in the amount of fuel which adheres to the walls of the air intake tube, and further, the amount of air intake varies according to environmental factors such as the air temperature the barometric pressure, or based on changes that occur in the engine itself over time.

To resolve the foregoing problems, Japan Patent Application Hei 9-271188 proposed the incorporation of a learning module, which, based on the operating state of the engine, could learn the estimated amount of air intake and estimated amount of fuel injection, and learn online the estimated amount of air intake and the estimated amount of fuel injection based on the difference between the target air/fuel ratio and the actual air/fuel ratio in order to perform the feed-forward control of the fuel injection, thereby comprising a control method which could deal with transition states, environmental changes, and changes over time.

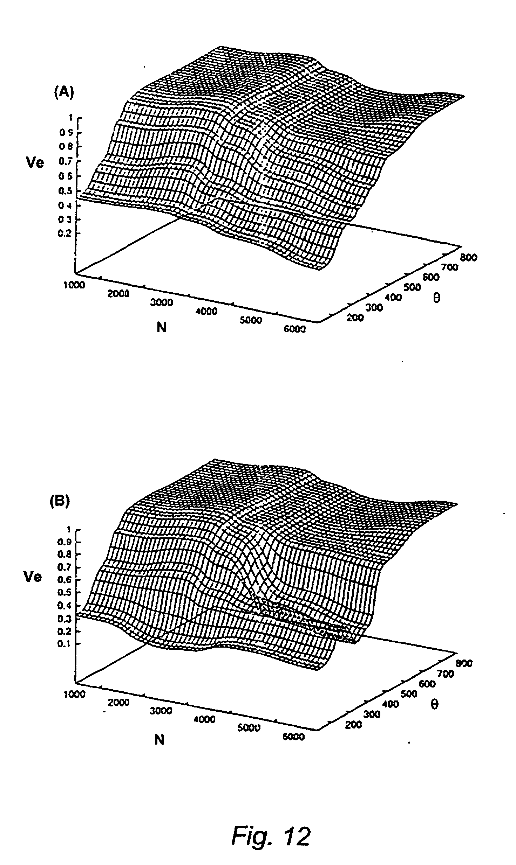

However, with the foregoing control method of the prior art, if there were changes in engine operating environment such as the air temperature or barometric pressure, learning could only be performed on the taught data (engine operating conditions) that was obtained, and large difference could develop between the part of the control characteristics that was learned and the part that was yet unlearned. This will be explained with reference to Figure 12. Figure 12 shows the results of learning the volume efficiency (Ve) based on the engine RPM (N) and the throttle aperture (θ). Figure 12 (A) shows the results prior to ascending Mt. Fuji to station 5, and (B) shows the results after descending the mountain. To wit, the ranges of the throttle aperture that were used in ascending and descending the mountain differed, therefore the map based on learning during the descent of the mountain differed from the map that was prepared before the ascent of the mountain, and it was not possible to compute an accurate estimated air intake volume and to exercise appropriate engine control.

Even apart from engine control, similar issues arise with regard to partial learning and character changes in robotic controls to deal with variations in their "senses".

Accordingly, it is an objective of the present invention to provide an online learning method as indicated above which reduces learning discrepancies and facilitates a more actuate control of the object of control.

According to the present invention, this objective is solved for an online learning method having the features of claim 1. Within this online learning method, it is preferable if the partial learning is carried out by a partial learning means and is combined with an overall learning, carried out by an overall learning means.

In that case, it is advantageous when said partial learning means learns the amount of operation based on the correction value of partial changes in the system and that the overall learning means learns the amount of operation based on the correction value for overall changes in the system.

When the learning rate for the overall learning means is set to be greater than the learning rate for the partial learning means, it is possible to minimize the effects of overall change upon the partial learning.

Moreover, when the amount of correction of the overall changes exceeds a certain percentage change, learning by the foregoing partial learning means is halted so that it is possible to combine partial learning with overall learning in a way that they do not interfere with each other.

Further, when the foregoing object of the control is an engine, the amount of operation is the amount of fuel injection, the target and output values are air/fuel ratios, the partial learning means is a means to learn the amount of correction over time, the overall learning means is a means to learn the amount of correction based on environmental changes, wherein the overall learning means uses the output values as-is when the engine is operating steadily, but uses a statistical processing of the output values when the engine is operating in abnormal (extreme) conditions and the partial learning means uses the output values as-is when the engine is operating steadily, but uses a statistical processing of the output values when the engine is operating abnormally, partial learning may be performed on changes over time and may be combined with overall learning that corrects for environmental changes to make possible the reduction of the learning discrepancy and to allow more accurate control of the object of control.

In order to facilitate the control during the warm-up period, it is advantageous when a warm-up correction coefficient is used during the engine warm-up period, and overall learning is performed after the warm-up period has been completed.

A consecutive learning is possible when the foregoing learning module incorporates a fuzzy neural network, a Cerebellar Model Arithmetic Computer (CMAC) or a similar means.

Other preferred embodiments of the present invention are laid down in further dependent claims.

In the following, the present invention is explained in greater detail with respect to several embodiments thereof in conjunction with the accompanying drawings, wherein:

Figure 1 is a component diagram of an embodiment of the online learning method.

Figure 2 is an engine component diagram showing the embodiment of the online learning method applied to the control of fuel injection on an engine.

Figure 3 is a block diagram of the fuel injection control taking place inside the control apparatus of Figure 2.

Figure 4 is a block diagram showing the structure of the model base control unit of Figure 20.

Figure 5 is a simplified diagram of the fuzzy neural network used to determine the estimated volume efficiency in the volume efficiency computing unit of Figure 3.

Figure 6 is a figure showing the form of the rule map of Figure 5.

Figure 7 is a block diagram showing the components of the amount-of-correction computing unit for making environmental corrections as shown in Figure 3.

Figure 8 is a flow chart to explain the learning method used in the embodiment of Figure 3.

Figure 9 is a flow chart to explain another learning method for the embodiment of Figure 3.

Figure 10 shows graphs of control results obtained during the ascent and descent of Mt. Fuji when only partial learning was performed, and when it was combined with overall learning.

Figure 11 shows graphs showing the output results for air intake at the point of reaching the summit according to Figure 9.

Figure 12 shows graphs showing the volume efficiency using conventional online learning: (A) is prior to the ascent to station 5 of Mt. Fuji and (B) is after descending the mountain.

The implementation of an embodiment of an online learning method will be described below with reference to the figures. This embodiment is equipped with a learning module 52 which can compute learnable control parameters based on the operating state of the object 54 of control, and which can exercise feed forward control on the object 54 being controlled, such as an engine, robot, etc.

A control unit 53 computes the amount of operation from the operating conditions, control parameters, and the overall correction coefficient and outputs to the object 54 of control. The learning module 52 computes the control parameters from the operating conditions and feeds them to the control unit 53. At that time a computer unit 55 for determining the amount of correction for partial changes computes the amount of correction to minimize the difference between the target value and the actual output value to correct the control parameters, and in addition, the learning module 52 (partial learning) learns the corrected control parameters.

On the other hand, the overall correction coefficient is memorized in the overall correction unit 57, and the overall change correction computer unit 56 computes the amount of correction to minimize the difference between the target values and the actual output values to correct the overall correction coefficient, and in addition, the overall correction unit 57 performs feed forward learning (overall learning) of the corrected overall correction coefficient. The overall correction coefficient is used by the control unit 53 to correct the amount of operation.

Within this embodiment, the learning rate $GZ$ for the overall learning Is greater than the learning rate $GB$ for the partial learning, for example, $GZ/GB$ = 10 to 100, which will minimize the effects that the overall changes have on the partial changes. Here, when the target value is $T$ and the pre-corrected amount of correction is $H$, the post-correction amount of correction is $H'$, and the learning rate (gain) is $G$, then:

$$H' = (T-H)\,G + H$$

accordingly, the learning rate (gain) is:

$$G = (H' - H) / (T - H).$$

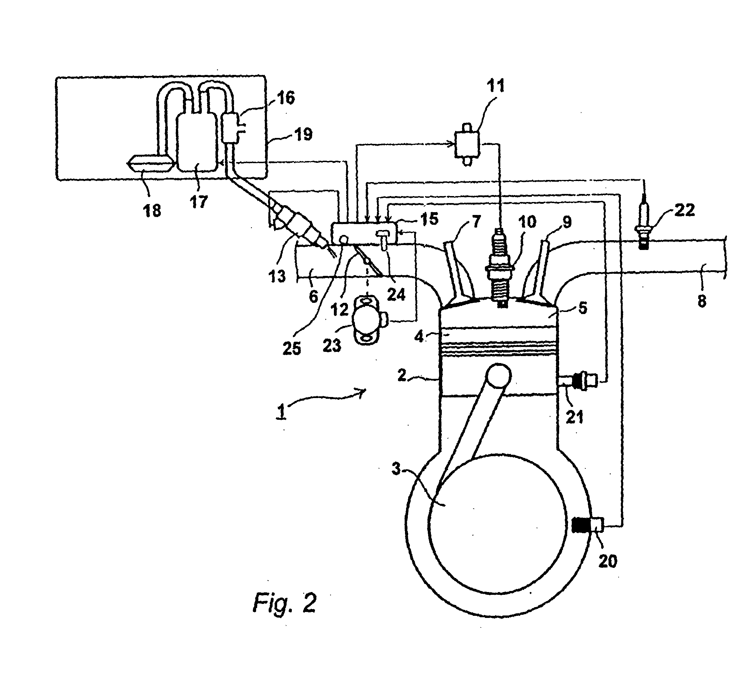

Figures 2 through 11 relate to an embodiment of the online learning method applied to the control of fuel injection in an engine. Figure 2 is a component diagram of the engine of this embodiment, wherein the four cycle engine 1 is composed of a cylinder body 2, crankshaft 3, piston 4, combustion chamber 5, air intake tube 6, air intake valve 7, exhaust valve .8, spark plug 10, and ignition coil 11. A throttle valve 12 is positioned inside the air intake tube 6, and an injector 13 is mounted upstream of the throttle valve 12. Further, a box containing an engine control unit 15 (ECU) is mounted to the wall surface of the air intake tube 6. The injector 13 is connected to the fuel tank 19 through a pressure adjustment valve 16, an electric motor driven fuel pump 17, and a filter 18.

The detection signals from a variety of sensors that detect the operating condition of the engine 1 are fed into the control unit 15. To wit, the sensors include a crank angle sensor 20 which detects the rotational angle of the crankshaft 3 (means to detect engine RPM), an engine temperature detection means 21 detects the temperature of the cylinder body 2 or the coolant temperature (to wit, the engine temperature), a throttle aperture detection means 23 detects the aperture of the throttle valve 12, an air intake negative pressure detection means 24 detects the pressure inside the air intake tube, and an air intake tube wall temperature detection means 25 detects the temperature of the air intake walls. The control unit 15 performs computations based on the detected values from these sensors, and transmits control signals to the injector 13, the fuel pump 17 and the ignition coil 11.

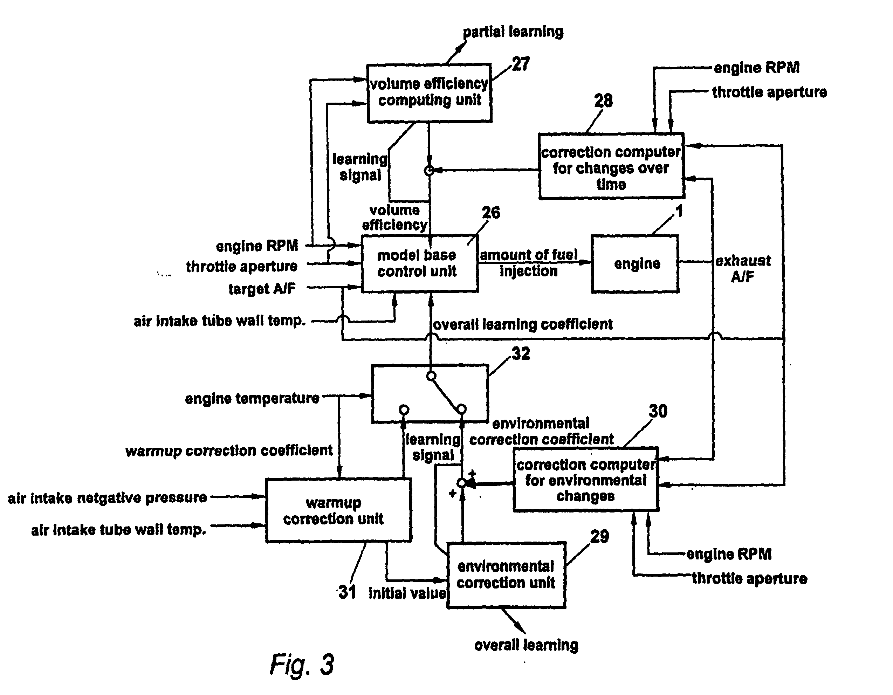

Figure 3 is a component diagram of the fuel injection control performed inside the control unit 15 of Figure 2. A model base control unit 26 computes and emits the amount of fuel injection for the engine 1 from the engine rpm, the throttle aperture, the target A/F ratio, the volume efficiency and the overall correction coefficient. The volume efficiency computing unit 27 computes the volume efficiency from the engine RPM and the throttle aperture and transmits it to the model base control unit 26. At this time, the correction computer 28, which corrects for changes over time, computes an amount of correction for changes over time that seeks to minimize the difference between the target A/F ratio and the actual A/F ratio to thereby correct the volume efficiency, and then, based on this corrected volume efficiency (learning signal), learning (described below) is performed in the volume efficiency learning unit 27 (partial learning).

On the other hand, the environmental correction unit 29 memorizes the environmental correction coefficient, and the correction computation unit 30 for the environmental correction computes the amount of the environmental correction by seeking to minimize the difference between the target A/F ratio and the actual exhaust A/F ratio, and the corrected environmental correction coefficient (learning signal) is fed back to the environmental correction unit 29 where learning is performed (overall learning).

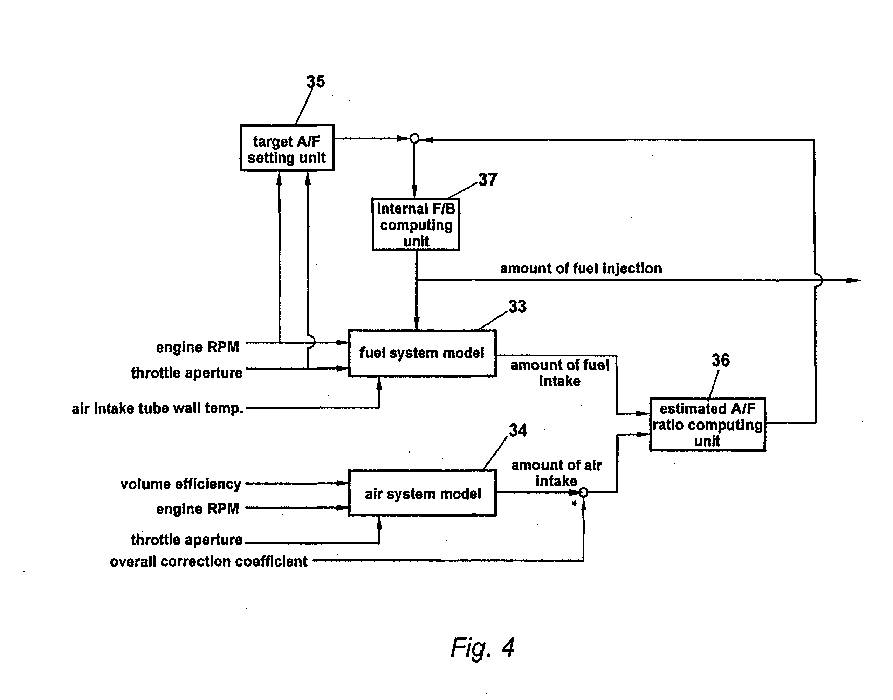

When the A/F ratio is unstable, such as directly after starting the engines when the sensors are not adequately active and when combustion is unstable, a switch 32 switches to the warmup correction unit 31, which computes a warmup correction coefficient based on the engine temperature, the barometric pressure when the engine is started (air intake negative pressure) and the ambient temperature (air intake wall temperature). After warmup, the switch 32 switches to the environmental correction unit 29 side. At this time, the initial value for the warmup coefficient is used as the environmental correction coefficient for the environmental correction unit. Thus, the environmental correction coefficient or the warmup correction coefficient are used by the model base control unit 26 shown in Figure 4 to correct the amount of air intake. This environmental correction coefficient may also include the effects of temperature.

Figure 4 is a block diagram showing the structure of the model base control unit 26. This model base control unit is equipped with a fuel system model 33 to estimate the amount of fuel intake based on the engine RPM, the throttle aperture and the air intake tube wall temperature; an air system model 34 which estimates the amount of intake air from the engine RPM, throttle aperture, and volume efficiency; an estimated air/fuel ratio computing unit 36 which computes the estimated air/fuel ratio from the engine RPM and throttle aperture to set the target A/F ratio in the target A/F ratio setting unit 35, and it computes the estimated air/fuel ratio from the amount of air intake and amount of fuel intake as corrected by the overall correction coefficient; and the internal F/B (feedback) computing unit 37 that receives the output from the engine and fuel system module 33 and then computes the amount of fuel injection based on the differences between the target A/F ratio and the estimated A/F ratio.

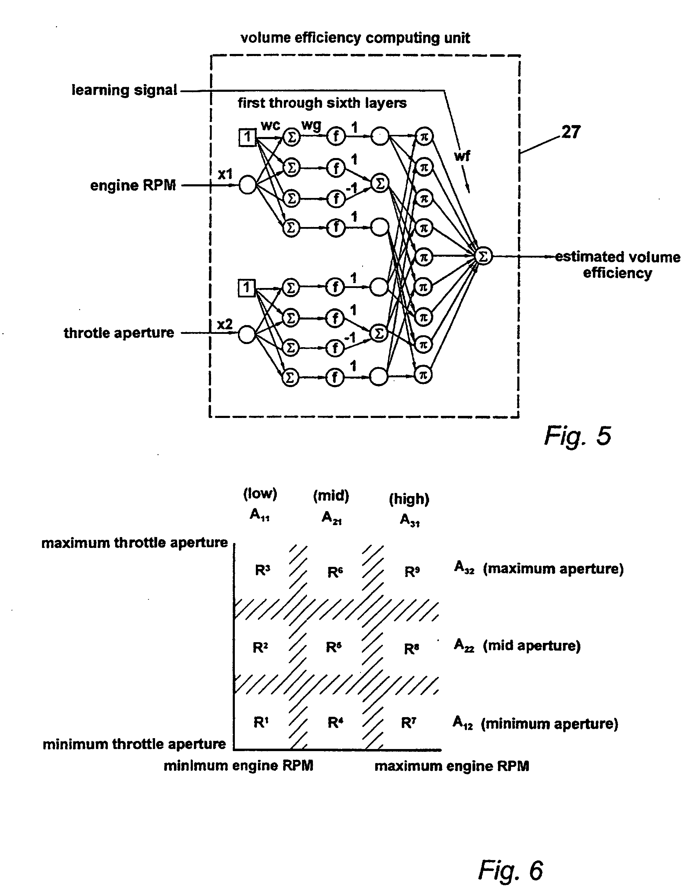

Figure 5 is a simplified component diagram of the fuzzy neural network inside the volume efficiency computing unit 27 of Figure 3 which determines the volume efficiency (the ratio of the volume of air entering the cylinder to the cylinder's volume). Since the volume efficiency cannot be determined with a mathematical formula, a fuzzy neural network is utilized to model the volume efficiency. The fuzzy neural network is of layered construction, composed of six processing layers. The first through fourth layers are the precondition area while layers five and six are the post-condition layers. The engine RPM and throttle aperture values fed into the precondition layers are appropriately modified according to specific rules using fuzzy logic estimating, and then the values obtained from the precondition area are used in the post-condition area to determine the estimated volume efficiency using the center of gravity method.

As shown in Figure 6, the above mentioned rules are composed of three operating conditions $A_{11}$, $A_{21}$, $A_{31}$ and $A_{12, A22}$ and $A_{32}$, which correspond to the engine RPM and throttle aperture, respectively, and conclusions $R^1$ through $R^9$. Figure 6 shows the rules in map form. The throttle aperture for the operating conditions $A_{11}$, $A_{21}$ and $A_{31}$ are shown on the vertical axis while the operating conditions $A_{12}$, $A_{22}$, $A_{32}$ with respect to the engine RPM are shown on the horizontal axis. These engine RPM and throttle apertures form a two dimensional space which is divided into 9 areas that define various operating conditions for which there are conclusions $R^1$ through $R^9$.

In this case, for the foregoing operating condition $A_{11}$, the engine RPM is in the "low RPM range", for the operating condition $A_{21}$, the engine RPM is in the "middle RPM range" and for the operating condition $A_{31}$, the engine RPM is in the "high RPM range." For the throttle aperture, at operating condition $A_{12}$, the aperture is "low", at operating condition $A_{22}$, the aperture is at "middle", and at operating condition $A_{32}$ the aperture is "high". Also, conclusions $R^1$ through $R^9$ represent the estimated volume efficiency levels that correspond to the magnitude of the engine RPM and throttle aperture. Nine rules are created from the operating conditions and conclusions are such as "the estimated volume efficiency is 60% when the engine RPM is in the middle RPM range and the throttle aperture is in the middle range", or "the estimated volume efficiency is 90% when the engine RPM is in the high range and the throttle aperture is in the high range", etc.

In the first four layers described above, the processing with respect to the engine RPM is separated from the processing for the throttle aperture. In the first layer, the engine RPM signal and throttle aperture signal are received respectively as input signal xi (i = 1 or 2), and then in the second through fourth layers as the respective input signals xi and the contribution rates *aij* for the operating conditions $A_{11}$, $A_{21}$, $A_3$ and $A_{12}$, $A_{22}$ and $A_{32}$. Specifically, the contribution rate *aij* is computed as a sigmoid function *f(xi)* according to formula 1 below.

(1) Contribution rate $aij = f(xi) = \dfrac{1}{1 + exp\text{-}wg(xi + wc)}$ I

In the formula, *wc* and *wg* relate to the central values and slope of respective sigmoid functions. After determining the contribution rate *aij* in the fourth layer using the foregoing sigmoid function, in the fifth layer, Formula 2 is used determine the degree of correspondence $\mu i$ of the nine conclusions $R^1$ through $R^9$ with inputs for the contribution rate of the engine RPM and throttle aperture. Further, Formula 3 is used to normalize the $\mu i$, and in layer 6, Formula 4 is used to normalize the degree of conformity with respect to the various conclusions obtained from Formula 3, and to output various fuzzy rules *fi* (i.e. the output values corresponding to the various conclusions $R^1$ through $R^9$) which undergo load averaging to determine an estimated volume efficiency *Ve*. In Figure 5, *wf* is a coefficient of coupling that corresponds with the output value *fi*.

Formula 2: *degree of correspondence* $\mu i = \pi jaij$

Formula 3: *normalized degree of correspondence* $\bar{\mu} i = \frac{\mu i}{\Sigma \mu k}$

Formula 4: *estimated volume efficiency* $Ve = \sum_i \bar{\mu i}\ fi$

The volume efficiency computing unit 27 is equipped with learning ability and, in its initial operation stages, it can make direct comparisons of volume efficiencies that were determined experimentally and the volume efficiencies output from the fuzzy neural network; thus the central value and slope functions for the sigmoid function coefficients *wc* and *wg*, and the coupling coefficient *wf* are corrected and learned by the fuzzy neural network to minimize the error between the two volume efficiencies. After that, the foregoing coefficients are refreshed based on the volume efficiency (including engine RPM and throttle aperture data) corrected for the A/F discrepancy, thereby enabling the fuzzy neural network to perform online leaming.

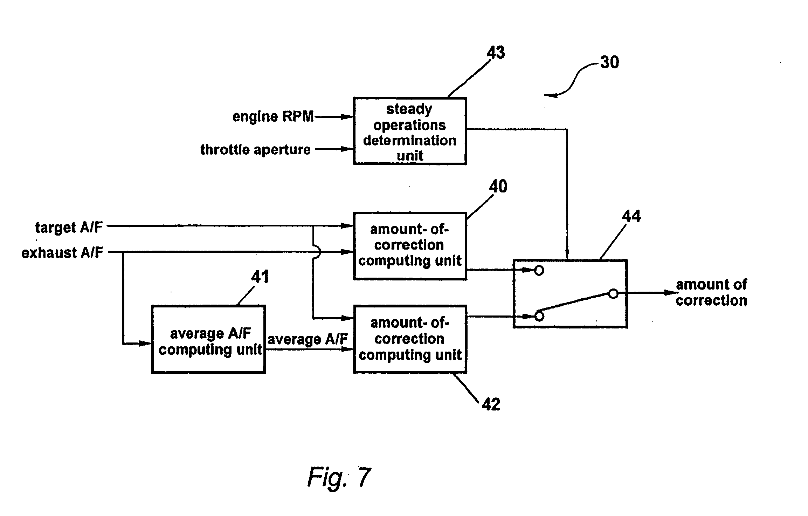

Figure 7 shows a block diagram of the amount-of-correction computing unit 28 performing corrections over time and the correction computing unit 30 for the environmental corrections. These units are composed of a computing unit 41 which computes an average A/F ratio of a specific time period from the exhaust A/F readings; a steady state determination unit 43 which determines, based on engine RPM and throttle aperture, whether or not the engine is running in a steady state; and a switch 44 which causes output to the amount-of-correction computing unit 40 when the engine is in a steady state, and output to the correction-amount computing unit 44 when the engine is in an extreme state. An environmental correction amount is computed by the computing unit 40 to make corrections that minimize the difference between the target A/F ratio and the exhaust gas A/F ratio. In the present embodiment, the average A/F ratio is computed during extreme state operations, but it is of course possible to also perform other statistical processing. In addition, since the corrections over time have a much lower gain than do the environmental corrections, the amount correction computing unit 28 results may be used as-is for extreme operating condition A/F ratio.

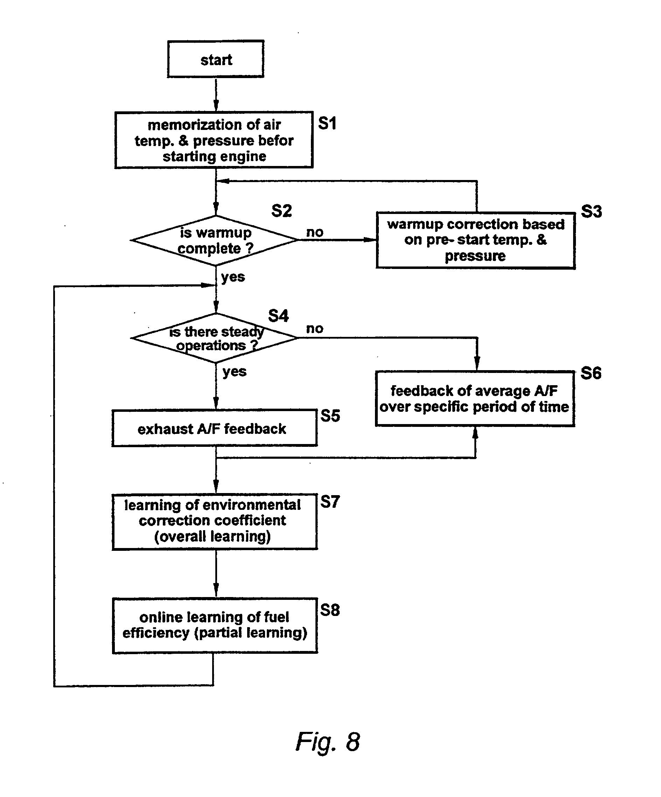

Figure 8 is a block diagram to explain the learning method used in the embodiment shown in Figure 3.

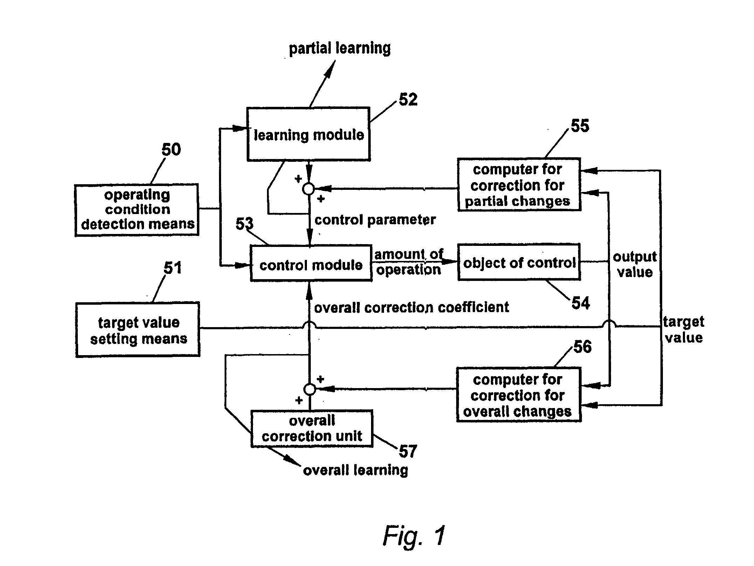

First in step S1, the barometric pressure and ambient temperature are memorized prior to engine starting; in step S2 the engine temperature is used to make the determination of whether the warmup period has been completed or not -- if not yet warmed up, in step 3, the barometric pressure and temperature are used to set the warmup correction coefficient to provide the correction for warmup operations. After the completion of the warmup, in step S4, the rate of change of the throttle aperture and the engine RPM are used to determine whether or not the engine is operating in a normal or steady state (or in an extreme state). If operating in a steady state, in step S5 the feedback of the exhaust A/F ratio is performed, and if not in normal or steady operations, in step S6 there is feedback of an average A/F ratio over time (e.g. 10 seconds). In step S7 environment correction coefficient learning (overall learning) is performed, and in step S8 online learning (partial learning) is performed regarding the volume efficiency. Thereafter, steps S4 through S8 are repeated. In the present embodiment, as explained for Figure 1, the learning rate *GZ* for the overall learning correction coefficient is large while that of the online learning rate *GB* for the partial learning is smaller. For example, the *GZ*/*GB* ratio should range from 10 to 100. This keeps the effects of the environmental changes (overall changes) upon the changes over time (partial learning) to an absolute minimum.

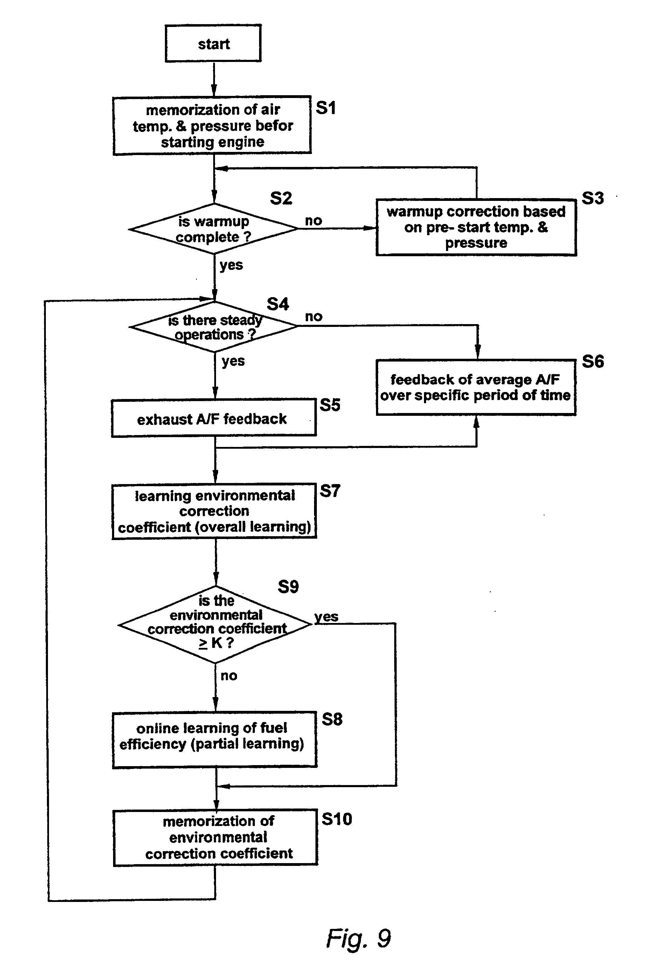

Figure 9 is a flow chart to explain another example of a learning method in the embodiment of Figure 3. In this embodiment, in step S9, when the environmental correction coefficient's rate of change exceeds a certain value *K*, the partial learning in step S8 is halted, and the environmental correction coefficient is learned in step S10. This method makes it possible to prevent mutual interference between overall learning and partial learning.

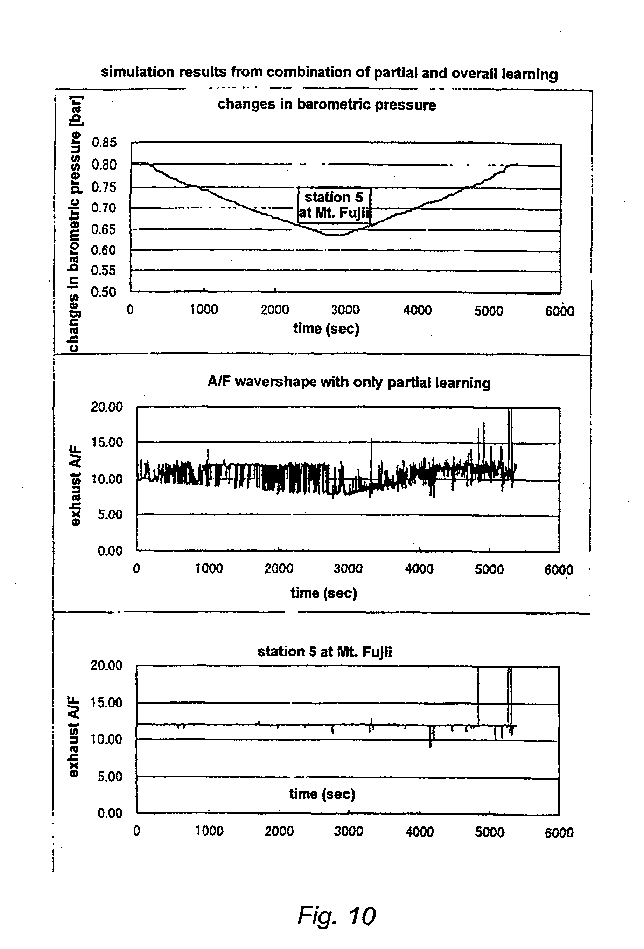

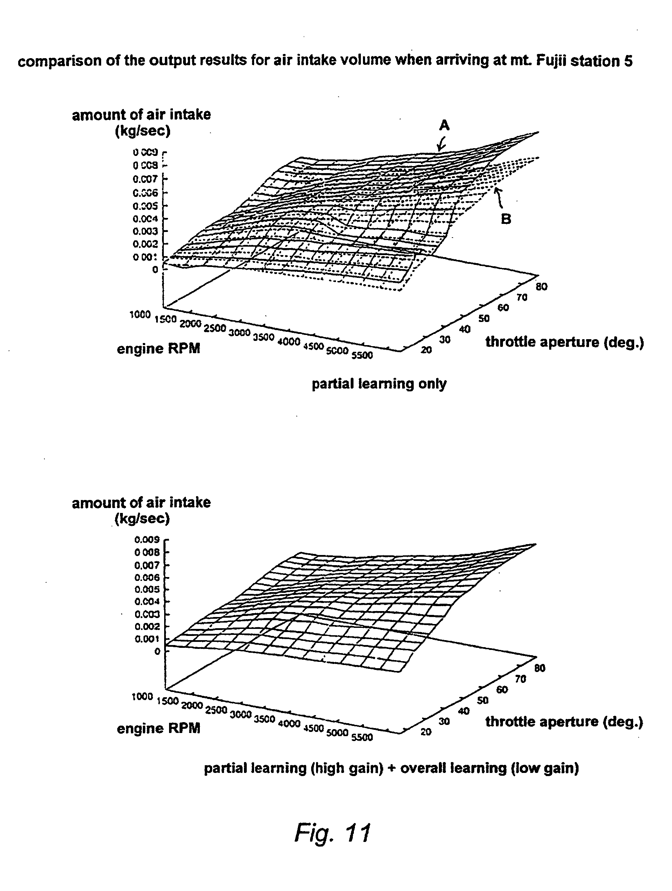

Figure 10 is a graph showing the control results produced while ascending Mt. Fuji to station 5 and descending while performing partial learning only, and while performing both overall learning and partial learning. In the case of partial learning only, there was a larger degree of waveshape hunting and in addition, it was not possible to reach the target A/F of 12.0. When both overall learning and partial learning were performed, the waveshape was smooth, and the A/F was controlled well to about 12.0. Figure 11 shows the air intake output results when the vehicle had ascended to station 5 as in Figure 10. When only partial learning was performed, a gap developed between the partial learning output results A and the output results B that should be obtained, but when overall learning and partial learning were combined, the two matched.

An embodiment of the online learning method was described above, but the teaching of this embodiment is not confined to the above, any number of changes can be made. For example, a fuzzy neural network was used as the learning module in the foregoing embodiment, but it would also be possible to use a neural network or CMAC (Cerebellar Model Arithmetic Computer), etc. as a computing model with learning capabilities. The advantage of using a CMAC over a step layer type of neural network is that it has the capability of performing additional learning and the learning is performed at a higher speed.

As has been explained above, according to the discussed embodiments, the combination of the partial learning with the overall learning reduces learning discrepancies and makes possible more accurate control of the object of control.

Further, it is possible to minimize the effects of overall change upon the partial learning.

Moreover, it is possible to combine partial learning with overall learning in a way that they do not interfere with each other.

In addition, when the teaching of the discussed embodiments is applied to engine control, partial learning is performed on changes over time and is combined with overall learning that corrects for environmental changes to make possible the reduction of the learning discrepancy and to allow more accurate control of the object of control.

It is further possible to exercise control during the warmup period.

Moreover, according to the teaching described above, Cerebellar Model Arithmetic Computer (CMAC) or a similar mean, the adoption of a fuzzy neural network as the learning model allows effective learning.

## Claims

1. An online learning method to correct an amount of operation required for an object of the control (54) based on a discrepancy between an output value of said object of the control (54) and a target value, said online learning method employing partial learning to learn an amount of correction over time by modifying control parameter to compensate for said discrepancy, wherein said control parameter are based on the operating state of said object of the control (54) and said partial learning is combined with an overall learning,
   **characterized in that**
   said overall learning learns an amount of operation based on a correction value for environmental changes in the system,
   wherein an environmental correction coefficient is modified in order to minimize the discrepancy between said target value and said output value and overall learning is performed on basis of a corrected environmental correction coefficient.

2. An online learning method according to claim 1, **characterized in that** the partial learning is carried out by a partial learning means (52), and is combined with the overall learning, carried out by an overall learning means (57).

3. An online learning method according to claim 2, **characterized in that** said partial learning means (52) learns the amount of operation based on the correction value of partial changes in the system and that the overall learning means (57) learns the amount of operation based on the correction value for overall changes in the system.

4. An online learning method according to claim 2 or 3, **characterized in that** the learning rate for the overall learning means (57) is set to be greater than the learning rate for the partial learning means (52).

5. An online learning method according to at least one of the preceding claims 2 to 4, **characterized in that** when the amount of correction for the overall changes exceeds a certain percentage change, learning by the partial learning means (52) is halted.

6. An online learning method according to at least one of the preceding claims 2 to 5, **characterized in that** the partial learning means (52) is equipped with a learning module that can learn and compute control parameters based on the operating state of the object of the control (54), and a means to perform online learning of control parameters values based on the error between the target value and computed value; and wherein, based on the error between the target value and the output value, the overall learning means (57) multiplies a correction coefficient with the control parameter.

7. An online learning method according to claim 6, **characterized in that** the object of the control (54) is an engine (1), the amount of operation is the amount of fuel injection, the target and output values are air/fuel ratios, the partial learning means (27) is a means to learn the amount of correction over time, the overall learning means (29) is a means to learn the amount of correction based on environmental changes, wherein the overall learning means (29) uses the output values as is when the engine (1) is operating steadily, but uses a statistical processing of the output values when the engine (1) is operating in abnormal (extreme) conditions.

8. An online learning method according to claim 7, **characterized in that** the partial learning means (27) uses the output values as is when the engine (1) is operating steadily, but uses a statistical processing of the output values when the engine (1) is operating abnormally.

9. An online learning method according to claims 7 or 8, **characterized in that** a warm-up correction coefficient is used during the engine (1) warm-up period, and overall learning is performed after the warm-up period has been completed.

10. An online learning method according to at least one of the preceding claims 2 to 9, **characterized in that** the learning module incorporates a fuzzy neural network, a Cerebellar Model Arithmetic Computer (CMAC) or a similar means.

11. An online learning method according to at least one of the preceding claims 4 to 10, **characterized in that** the relation between the learning rate GZ for the overall learning and the learning rate GB for the partial learning is from 10 to 100.

12. An online learning method according to claim 10 or 11, **characterized in that** a gain G of a learning rate fulfills the following equation:

$$G = (H' - H) / (T - H)$$

wherein H represents the pre-corrected amount of correction,
H' represents the post-corrected amount of correction, and
T represents a target value.

13. An online learning method according to at least one of the preceding claims 10 to 12, **characterized in that** the fuzzy neural network processes by using six layers, whereas the first to fourth layers are the pre-condition layers while the fifth and sixth layers are the post-condition layers.

**Patentansprüche**

1. Online- Lernverfahren, um einen Betrag der Betätigung, die für einen Gegenstand der Steuerung (54) erforderlich ist, auf der Grundlage einer Diskrepanz zwischen einem Ausgangswert des Gegenstandes der Steuerung (54) und einem Zielwert zu korrigieren, wobei das online- Lemverfahren ein partielles Lernen verwendet, um einen Korrekturbetrag über die Zeit durch Modifizierung der Steuerparameter zu lernen, um die Diskrepanz zu kompensieren, wobei die Steuerparameter auf dem Betriebszustand des Gegenstandes der Steuerung (54) basieren und das partielle Lernen mit einem Gesamt- Lernen kombiniert ist,
**dadurch gekennzeichnet, dass**
das Gesamt- Lernen einen Betrag der Betätigung auf der Grundlage eines Korrekturwertes für Umgebungsveränderungen in dem System lernt, wobei ein Umgebungskorrekturkoeffizient modifiziert wird, um die Diskrepanz zwischen dem Zielwert und dem Ausgangswert zu minimieren und das Gesamt- Lernen auf der Grundlage eines korrigierten Umgebungskorrekturkoeffizienten ausgeführt wird.

2. Online- Lernverfahren nach Anspruch 1, **dadurch gekennzeichnet, dass** das partielle Lernen durch eine Teil-Lemeinrichtung (52) ausgeführt wird, und mit dem Gesamt- Lernen, ausgeführt durch einen Gesamt- Lerneinrichtung (57), kombiniert wird.

3. Online- Lernverfahren nach Anspruch 2, **dadurch gekennzeichnet, dass** die Teil- Lerneinrichtung (52) den Betrag des Betätigung auf der Grundlage des Korrekturwertes von partiellen Veränderungen in dem System lernt und dass die Gesamt- Lerneinrichtung (57) den Betrag der Betätigung auf der Grundlage des Korrekturwertes für Gesamtveränderungen in dem System lernt.

4. Online- Lernverfahren nach Anspruch 2 oder 3, **dadurch gekennzeichnet, dass** die Lernrate für die Gesamt-Lerneinrichtung (57) größer als die Lemrate für die Teil- Lerneinrichtung (52) festgelegt ist.

5. Online- Lernverfahren nach zumindest einem der vorhergehenden Ansprüche 2 bis 4, **dadurch gekennzeichnet,**

**dass** dann, wenn der Betrag der Korrektur für die gesamten Veränderungen einen bestimmten Veränderungsprozentsatz übersteigt, das Lernen durch die Teil- Lemeinrichtung (52) angehalten wird.

6. Online- Lernverfahren nach zumindest einem der vorhergehenden Ansprüche 2 bis 5, **dadurch gekennzeichnet, dass** die Teil- Lerneinrichtung (52) mit einem Lernmodul ausgerüstet ist, das Steuerparameter auf der Grundlage des Betriebszustandes des Gegenstandes der Steuerung (54) lernen und berechnen kann, und mit einer Einrichtung, um ein Online- Lernen der Steuerparameterwerte auf der Grundlage des Fehlers zwischen dem Zielwert und dem berechneten Wert auszuführen; und wobei auf der Grundlage des Fehlers zwischen dem Zielwert und dem Ausgangswert die Gesamt- Lerneinrichtung (57) einen Korrekturkoeffizient mit dem Steuerparameter multipliziert.

7. Online- Lernverfahren nach Anspruch 6, **dadurch gekennzeichnet, dass** der Gegenstand der Steuerung (54) ein Motor (1) ist, der Betrag der Betätigung die Kraftstoffeinspritzmenge ist, die Ziel- und die Ausgangswerte Luft- / Kraftstoffverhältnisse sind, die Teil- Lerneinrichtung (52) eine Einrichtung ist, um die Korrekturmenge über die Zeit zu lernen, die Gesamt- Lerneinrichtung (57) eine Einrichtung ist, um die Korrekturmenge auf der Grundlage von Umgebungsveränderungen zu lernen, wobei die Gesamt- Lerneinrichtung (57) die Ausgangswerte verwendet, wie sie sind, wenn der Motor stabil arbeitet, aber ein statistisches Berechnen der Ausgangswerte verwendet, wenn der Motor (1) unter abnormalen (extremen) Bedingungen arbeitet.

8. Online- Lernverfahren nach Anspruch 7, **dadurch gekennzeichnet, dass** die Teil- Lerneinrichtung (27) die Ausgangswerte verwendet, wie sie sind, wenn der Motor (1) stabil arbeitet, aber ein statistisches Berechnen der Ausgangswerte verwendet, wenn der Motor (1) abnormal arbeitet.

9. Online- Lernverfahren nach Anspruch 7 oder 8, **dadurch gekennzeichnet, dass** ein Aufwärm- Korrekturkoeffizient während der Motor (1)-Aufwärmzeitdauer verwendet wird, und das Gesamt- Lernen ausgeführt wird, nachdem die Aufwärm-Zeitdauer abgeschlossen ist.

10. Online- Lernverfahren nach zumindest einem der vorhergehenden Ansprüche 2 bis 9, **dadurch gekennzeichnet, dass** das Lernmodul ein Fuzzy- Neurales-Netzwerk, einen Cerebralmodel- Berechnungscomputer (CMAC) oder eine ähnliche Einrichtung enthält.

11. Online- Lernverfahren nach zumindest einem der vorhergehenden Ansprüche 4 bis 10, **dadurch gekennzeichnet, dass** die Beziehung zwischen der Lernrate GZ für das Gesamt- Lernen und die Lernrate GB für das Teil- Lernen von 10 bis 100 ist.

12. Online- Lernverfahren nach Anspruch 10 oder 11, **dadurch gekennzeichnet, dass** eine Verstärkung G der Lernrate die folgende Gleichung erfüllt:

$$G = (H' - H) / (T - H)$$

wobei H die vorkorrigierte Korrekturmenge repräsentiert,
H' die nachkorrigierte Korrekturmenge repräsentiert, und
T einen Zielwert repräsentiert.

13. Online- Lernverfahren nach zumindest einem der vorhergehenden Ansprüche 10 bis 12, **dadurch gekennzeichnet, dass** das Fuzzy- Neurale- Netzwerk unter Verwendung von sechs Schichten arbeitet, während die erste bis vierte Schicht die Vor- Bedingungsschichten sind, während die fünfte und sechste Schicht die Nach- Bedingungsschichten sind.

**Revendications**

1. Procédé d'apprentissage en ligne pour corriger une ampleur d'opération nécessaire à un objet de la commande (54), sur la base d'une divergence entre une valeur de sortie dudit objet de la commande (54) et une valeur cible, ledit procédé d'apprentissage en ligne employant un apprentissage partiel pour apprendre une ampleur de correction au cours du temps par modification d'un paramètre de commande afin de compenser ladite divergence, dans lequel ledit paramètre de commande est basé sur l'état opératoire dudit objet de la commande (54) et ledit apprentissage partiel est combiné à un apprentissage global,

**caractérisé en ce que**

ledit apprentissage global apprend une ampleur d'opération sur la base d'une valeur de correction pour des variations environnementales au sein du système, dans lequel un coefficient de correction environnementale est modifié afin de rendre minimale la divergence entre ladite valeur cible et ladite valeur de sortie, l'apprentissage global étant accompli sur la base d'un coefficient de correction environnementale corrigé.

**2.** Procédé d'apprentissage en ligne selon la revendication 1, **caractérisé en ce que** l'apprentissage partiel est mis en oeuvre par un moyen d'apprentissage partiel (52), et est combiné à l'apprentissage global, mis en oeuvre par un moyen d'apprentissage global (57).

**3.** Procédé d'apprentissage en ligne selon la revendication 2, **caractérisé en ce que** ledit moyen d'apprentissage partiel (52) apprend l'ampleur d'opération sur la base de la valeur de correction des variations environnementales au sein du système, et **en ce que** le moyen d'apprentissage global (57) apprend l'ampleur d'opération sur la base de la valeur de correction des variations globales au sein du système.

**4.** Procédé d'apprentissage en ligne selon la revendication 2 ou 3, **caractérisé en ce que** la vitesse d'apprentissage du moyen d'apprentissage global (57) est fixée pour être supérieure à la vitesse d'apprentissage du moyen d'apprentissage partiel (52).

**5.** Procédé d'apprentissage en ligne selon au moins l'une revendications précédentes 2 à 4, **caractérisé en ce que**, lorsque l'ampleur de correction pour les variations globales dépasse un pourcentage de variation donné, l'apprentissage par le moyen d'apprentissage partiel (52) est arrêté.

**6.** Procédé d'apprentissage en ligne selon au moins l'une des revendications précédentes 2 à 5, **caractérisé en ce que** le moyen d'apprentissage partiel (52) est pourvu d'un module d'apprentissage qui peut apprendre et calculer des paramètres de commande sur la base de l'état opératoire de l'objet de la commande (54), et d'un moyen pour accomplir l'apprentissage en ligne des valeurs de paramètres de commande sur la base de l'erreur entre la valeur cible et la valeur calculée; et dans lequel, sur la base de l'erreur entre la valeur cible et la valeur de sortie, le moyen d'apprentissage global (57) multiplie un coefficient de correction par le paramètre de commande.

**7.** Procédé d'apprentissage en ligne selon la revendication 6, **caractérisé en ce que** l'objet de la commande (54) est un moteur (1), l'ampleur d'opération est la quantité de carburant à injecter, les valeurs cible et de sortie sont des rapports air/carburant, le moyen d'apprentissage partiel (27) est un moyen pour apprendre l'ampleur de correction au cours du temps, le moyen d'apprentissage global (29) est un moyen pour apprendre l'ampleur de correction sur la base des variations environnementales, et dans lequel le moyen d'apprentissage global (29) utilise les valeurs de sortie comme dans le cas où le moteur (1) fonctionne en régime permanent, mais utilise un traitement statistique des valeurs de sortie dans le cas où le moteur (1) fonctionne dans des conditions anormales (extrêmes).

**8.** Procédé d'apprentissage en ligne selon la revendication 7, **caractérisé en ce que** le moyen d'apprentissage partiel (27) utilise les valeurs de sortie comme dans le cas où le moteur (1) fonctionne en régime permanent, mais utilise un traitement statistique des valeurs de sortie dans le cas où le moteur (1) fonctionne de façon anormale.

**9.** Procédé d'apprentissage en ligne selon la revendication 7 ou 8, **caractérisé en ce qu'**un coefficient de correction de chauffe est utilisé pendant la période de chauffe du moteur (1), l'apprentissage global étant accompli postérieurement à la fin de la période de chauffe.

**10.** Procédé d'apprentissage en ligne selon au moins l'une revendications précédentes 2 à 9, **caractérisé en ce que** le module d'apprentissage incorpore un réseau neuronal flou, un ordinateur arithmétique de modèle Cerebellar (CMAC) ou un moyen similaire.

**11.** Procédé d'apprentissage en ligne selon au moins l'une revendications précédentes 4 à 10, **caractérisé en ce que** le rapport entre la vitesse d'apprentissage GZ de l'apprentissage global et la vitesse d'apprentissage GB de l'apprentissage partiel est compris entre 10 et 100.

**12.** Procédé d'apprentissage en ligne selon la revendication 10 ou 11, **caractérisé en ce qu'**un gain G d'une vitesse d'apprentissage satisfait à l'équation suivante :

$$G=(H'-H)/(T-H)$$

où H représente l'ampleur de correction avant correction, H' représente l'ampleur de correction après correction et T représente une valeur cible.

**13.** Procédé d'apprentissage en ligne selon au moins l'une des revendications précédentes 10 à 12, **caractérisé en ce que** le réseau neuronal flou opère un traitement en utilisant six couches, les première à quatrième couches étant les couches de pré-condition alors que les cinquième et sixième couches sont les couches de post-condition.

partial learning
52
learning module
control parameter
control module
53
amount of operation
object of control
54
computer for correction for partial changes
55
output value
target value
overall correction coefficient
computer for correction for overall changes
56
overall correction unit
57
overall learning
operating condition detection means
50
target value setting means
51

*Fig. 1*

22
8
20
21
5
9
10
11
7
15
4
2
3
24
12
23
6
25
13
1
16
19
17
18

Fig. 2

engine RPM
throttle aperture
28
correction computer for changes over time
exhaust A/F
1
engine
partial learning
27
volume efficiency computing unit
learning signal
volume efficiency
26
model base control unit
amount of fuel injection
overall learning coefficient
engine RPM
throttle aperture
target A/F
air intake tube wall temp.
32
engine temperature
warmup correction coefficient
learning signal
environmental correction coefficient
30
correction computer for environmental changes
engine RPM
throttle aperture
29
environmental correction unit
overall learning
initial value
31
warmup correction unit
air intake netgative pressure
air intake tube wall temp.


*Fig. 3*

35
target A/F setting unit
37
internal F/B computing unit
amount of fuel injection
33
fuel system model
amount of fuel intake
34
air system model
amount of air intake
*
36
estimated A/F ratio computing unit
engine RPM
throttle aperture
air intake tube wall temp.
volume efficiency
engine RPM
throttle aperture
overall correction coefficient

*Fig. 4*

volume efficiency computing unit
learning signal
first through sixth layers
engine RPM
throtle aperture
x1
x2
wc
wg
wf
27
estimated volume efficiency

Fig. 5

(low)
A11
(mid)
A21
(high)
A31
maximum throttle aperture
minimum throttle aperture
minimum engine RPM
maximum engine RPM
R3
R6
R9
R2
R5
R8
R1
R4
R7
A32 (maximum aperture)
A22 (mid aperture)
A12 (minimum aperture)

Fig. 6

30
43
steady operations determination unit
engine RPM
throttle aperture
40
amount-of-correction computing unit
42
amount-of-correction computing unit
41
average A/F computing unit
average A/F
target A/F
exhaust A/F
44
amount of correction

*Fig. 7*

start
memorization of air temp. & pressure befor starting engine
S1
S2
is warmup complete ?
no
yes
warmup correction based on pre- start temp. & pressure
S3
S4
is there steady operations ?
no
yes
feedback of average A/F over specific period of time
S6
exhaust A/F feedback
S5
learning of environmental correction coefficient (overall learning)
S7
online learning of fuel efficiency (partial learning)
S8

*Fig. 8*

start
memorization of air temp. & pressure befor starting engine
S1
S2
is warmup complete ?
no
S3
warmup correction based on pre- start temp. & pressure
yes
S4
is there steady operations ?
no
yes
S6
feedback of average A/F over specific period of time
exhaust A/F feedback
S5
learning environmental correction coefficient (overall learning)
S7
S9
is the environmental correction coefficient ≥ K ?
yes
no
online learning of fuel efficiency (partial learning)
S8
memorization of environmental correction coefficient
S10

*Fig. 9*

simulation results from combination of partial and overall learning

changes in barometric pressure

changes in barometric pressure [bar]

0.85
0.80
0.75
0.70
0.65
0.60
0.55
0.50

station 5 at Mt. Fujii

0 1000 2000 3000 4000 5000 6000

time (sec)

A/F wavershape with only partial learning

exhaust A/F

20.00
15.00
10.00
5.00
0.00

0 1000 2000 3000 4000 5000 6000

time (sec)

station 5 at Mt. Fujii

exhaust A/F

20.00
15.00
10.00
5.00
0.00

time (sec)

0 1000 2000 3000 4000 5000 6000

*Fig. 10*

comparison of the output results for air intake volume when arriving at mt. Fujii station 5

amount of air intake
(kg/sec)
A
B
0.009
0.008
0.007
0.006
0.005
0.004
0.003
0.002
0.001
0
1000
1500
2000
2500
3000
3500
4000
4500
5000
5500
engine RPM
20
30
40
50
60
70
80
throttle aperture (deg.)

partial learning only

amount of air intake
(kg/sec)
0.009
0.008
0.007
0.006
0.005
0.004
0.003
0.002
0.001
0
1000
1500
2000
2500
3000
3500
4000
4500
5000
5500
engine RPM
20
30
40
50
60
70
80
throttle aperture (deg.)

partial learning (high gain) + overall learning (low gain)

*Fig. 11*

(A)
Ve
1
0.9
0.8
0.7
0.6
0.5
0.4
0.3
0.2
1000
2000
3000
4000
5000
6000
N
200
300
400
500
600
700
800
θ

(B)
Ve
1
0.9
0.8
0.7
0.6
0.5
0.4
0.3
0.2
0.1
1000
2000
3000
4000
5000
6000
N
200
300
400
500
600
700
800
θ

*Fig. 12*